Europäisches Patentamt

**European Patent Office**

Office européen des brevets

(11) Veröffentlichungsnummer: **0 259 753**
**A2**

(12) **EUROPÄISCHE PATENTANMELDUNG**

(21) Anmeldenummer: 87112719.7

(22) Anmeldetag: 01.09.87

(51) Int. Cl.⁴: **C08L 69/00 , C08L 35/06 ,**
**G11B 7/24**

(30) Priorität: 12.09.86 DE 3631007
14.02.87 DE 3704658

(43) Veröffentlichungstag der Anmeldung:
**16.03.88 Patentblatt 88/11**

(84) Benannte Vertragsstaaten:
**DE FR GB IT NL**

(71) Anmelder: **BAYER AG**
**Konzernverwaltung RP Patentabteilung**
**D-5090 Leverkusen 1 Bayerwerk(DE)**

(72) Erfinder: **Wehnert, Wolfgang, Dr.**
**Bodelschwinghstrasse 14**
**D-4150 Krefeld 1(DE)**
Erfinder: **Grigo, Ulrich, Dr.**
**Michelsheide 9**
**D-4152 Kempten 3(DE)**
Erfinder: **Schmid, Helmut, Dr.**
**Wedelstrasse 69**
**D-4150 Krefeld 1(DE)**
Erfinder: **Anders, Siegfried, Dr.**
**Humperdinckstrasse 3**
**D-5000 Köln 90(DE)**
Erfinder: **Siebourg, Wolfgang, Dr.**
**Augustastrasse 24**
**D-5300 Bonn 2(DE)**
Erfinder: **Berg, Klaus, Dr.**
**Hansastrasse 124**
**D-4150 Krefeld 1(DE)**
Erfinder: **Lindner, Christian, Dr.**
**Riehlerstrasse 200**
**D-5000 Köln 60(DE)**

㊴ **Mischungen aus thermoplastischen Polycarbonaten und thermoplastischen**
**Styrol-Maleinsäureanhydrid-Copolymerisaten und ihre Verwendung als Substrate für optische**
**Datenspeicher.**

(57) Gegenstand der vorliegenden Erfindung sind Mischungen bestehend aus 20 Gew.-% bis 95 Gew.-% an thermoplastischen, aromatischen Polycarbonaten auf Basis von 2,2-Bis-(4-hydroxyphenyl)-propan, die p-(Iso-$C_8$-$C_9$-alkyl)-phenyl-Endgruppen aufweisen, und 80 Gew.-% bis 5 Gew.-% an thermoplastischen Styrol-Maleinsäureanhydrid-Copolymerisaten sowie ihre Verwendung als Verwendung als Substrate für optitische Datenspeicher.

**Mischungen aus thermoplastischen Polycarbonaten und thermoplastischen Styrol-Maleinsäureanhydrid-Copolymerisaten und ihre Verwendung als Substrate für optische Datenspeicher.**

Gegenstand der vorliegenden Erfindung sind Mischungen bestehend aus

A) 20 Gew.-% bis 95 Gew.-%, vorzugsweise 50 Gew.-% bis 85 Gew.-% an thermoplastischen aromatischen Polycarbonaten mit einem $\overline{M}$ w (Gewichtsmittelmolekulargewicht, ermittelt über die selektive Viskosität in CH₂Cl₂ bei einer Konzentration von 0,5 g Polycarbonat in 100 ml Lösung oder ermittelt durch andere übliche Methoden wie Lichtstreuung oder Gelchromatographie) zwischen 10 000 und 40 000, vorzugsweise zwischen 15 000 und 35 000 und p-(Iso-C₈-C₉-alkyl)-phenyl-Endgruppen,

B) 80 Gew.-% bis 5 Gew.-%, vorzugsweise 50 Gew.-% bis 15 Gew.-%, an thermoplastischen Styrol-Maleinsäureanhydrid-Copolymerisaten mit einem $\overline{M}$ w (Gewichtsmittelmolekulargewicht, ermittelt durch übliche Methoden) zwischen 60 000 und 400 000, vorzugsweise zwischen 80 000 und 350 000, die dadurch gekennzeichnet sind, daß die Polycarbonate A) aus mindestens 80 Mol-%, bezogen auf Mole Diphenole, 2,2-Bis-(4-hydroxyphenyl)-propan und aus maximal 20 Mol-%, bezogen auf Mole Diphenole, anderen Diphenolen, ausgewählt aus Hydrochinon, Resorcin, Dihydroxydiphenyl, den Gruppen der Bis-hydroxyphenyl-alkane, -cycloalkane, -sulfide, -sulfone, -ether sowie deren kernalkylierten Verbindungen hergestellt sind, und daß die Copolymerisate B) einen Gehalt an einpolymerisiertem Maleinsäureanhydrid zwischen 3 Gew.-% und 30 Gew.-%, vorzugsweise zwischen 5 Gew.-% und 15 Gew.-%, bezogen auf Gewichtssumme aus Styrol und Maleinsäureanhydrid, haben.

Die erfindungsgemäßen Mischungen sind aufgrund ihrer niedrigen Doppelbrechung als Substrate für optische Datenspeicher geeignet, da solche Mischungen sich zur Herstellung von Formkörpern mit besonders niedriger Doppelbindung in tangentialer und radialer Richtung zur Plattenfläche eignen.

Gegenstand der vorliegenden Erfindung ist somit auch die Verwendung der erfindungsgemäßen Mischungen als Substrate für optische Datenspeicher.

Die anteilmäßige Zusammensetzung einer solchen Abmischung, bei der nicht nur Verringerung, sondern Kompensation der Doppelbrechung auftritt, kann aufgrund unterschiedlicher Fließvorgänge der Schmelze von der Gestalt eines Formkörpers abhängen.

Die Information optischer Datenträger wird mit dem linear polarisierten Licht eines Lasers gelesen und im Falle beschreibbarer Datenspeicher auch eingeschrieben. Eines der Systeme für beschreib-und löschbare Verfahren sind die magnetooptischen Datenspeicher: Hier muß besonderer Wert auf doppelbrechungsfreies Substratmaterial gelegt werden, da eine geringfügige Drehung (unter 1°) der Licht-Schwingungsebene schon als Signal gelesen wird.

Doppelbrechung setzt sich in Kunststoffen (Thermoplasten) im wesentlichen aus 2 Faktoren zusammen: Einer materialspezifischen Komponente einerseits und einem verarbeitungsbedingten Anteil, der auch als Orientierungsdoppelbrechung bezeichnet wird, andererseits. Doppelbrechungsarme, thermoplastische Formteile können somit durch zweierlei Maßnahmen hergestellt werden, entweder durch die Wahl geeigneter Verarbeitungsparameter, beispielsweise durch Verarbeitung von niedrigviskosen Typen bei relativ hoher Temperatur wie etwa beim Spritz gießen oder Spritzprägen von Audio-Compact-Discs aus thermoplastischem Polycarbonat, oder durch den Einsatz von Material, das von sich aus nur geringe Neigung zur Doppelbrechung zeigt, wie beispielsweise Polymethylmethacrylate, welche für die Herstellung von Video-Discs verwendet werden.

Beschreibbare Speicherverfahren wie z.B. magnetooptische Systeme erfordern beim Beschreiben eine relativ hohe Energie, um ein akzeptables Signal/Rausch-Verhältnis zu bekommen. Dazu wird eine Optik mit großer numerischer Apertur verwendet. Durch den Öffnungswinkel der Schreib-und Leseoptik bedingt, bekommt eine möglichst geringe optische Anisotropie auch für den Strahlenverlauf in tangentialer und radialer Richtung erhebliche Bedeutung. So zeigen Compact Discs, die in achsialer Richtung bereits sehr niedrige Gangunterschiede der Doppelbrechung (unter 10 nm/mm) aufweisen, tangential und radial noch hohe Meßwerte, typischerweise um 500 -1.000 nm/mm.

In der DE-OS 2 252 974 (Le A 14 616) und in "Hansen und Bland, Impact Strength and Melt Viscosity of Bisphenol-A-Polycarbonate and Styrene-Maleic-Anhydride Copolymer Blends", Polymer Engineering and Science, 1985, Vol. 25, No. 14, Seiten 896 bis 902, werden Mischungen aus Polycarbonaten mit Styrol-Maleinsäureanhydrid-Copolymerisaten beschrieben. Die Verwendung als Substrate für optische Datenspeicher wird dort jedoch nicht angesprochen.

Die in diesen beiden Literaturstellen beschriebenen Polycarbonate haben außerdem keine p-(Iso-C₈-C₉-alkyl)-phenyl-Endgruppen. Hierbei wurden jedoch die Zitierungen der "Hansen und Bland" Literaturstelle nicht berücksichtigt.

In der japanischen Offenlegungsschrift Sho-61-19656 vom 28.01.1986 werden Gemische aus Polycarbonaten mit Styrol-Maleinsäureanhydrid-Copolymeren beschrieben. Diese Gemische werden als Rohstoffe für optische Apparate empfohlen. Die in Sho-61-19656 beschriebenen Polycarbonate haben jedoch nicht die p-(Iso-$C_8$-$C_9$-alkyl)-phenyl)-Endgruppen, sondern als nächstvergleichbaren Kettenabbrecher für die Polycarbonate ist p-tert.-Butylphenol offenbart. Derartige Mischungen aus Polycarbonaten mit p-tert.-Butylphenyl-Endgruppen haben jedoch gegenüber Polycarbonaten mit p-(Iso-$C_8$-$C_9$-alkyl)-phenyl)-Endgruppen den Nachteil, daß die aus ihnen geformten Spritzgußkörper (z.B. Compact Discs) starke Schwankungen bezüglich ihrer optischen Homogenität (Doppelbrechung) aufweisen.

Entsprechendes gilt für die Lehre der EP-OS 0 199 824, veröffentlicht als WO86/02653 am 09. Mai 1986.

Schließlich sind beispielsweise aus der EP-OS 0 183 116 (Le A 23 439-EP) flammwidrige thermoplastische Formmassen auf Basis von halogenfreien Polycarbonaten und Styrol-Maleinsäureanhydrid-Copolymerisaten bekannt. Hierbei sind als bevorzugte Diphenole 2,2-Bis-(4-hydroxyphenyl)-propan und 1,1-Bis-(4-hydroxphenyl)-cyclohexan genannt, jedoch nicht die speziellen p-(Iso-$C_8$-$C_9$-alkyl)-phenyl-Endgruppen. Die Verwendung als Substrate für optische Datenspeicher ist auch nicht angesprochen.

In der EP-OS 0 063 769 bzw. dem US-Patent 4 420 584 sind glasfaserhaltige Mischungen von Polycarbonaten mit Styrol-Maleinsäureanhydrid-Copolymeren beschrieben. Die Verwendung derartiger Mischungen als Substrate für optische Datenspeicher ist nicht angesprochen. Die einzusetzenden Polycarbonate können Alkylphenole (Seite 6, EP-OS 0 063 769 Zeile 5) oder beispielsweise Butylphenole, speziell p-tert.-Butyl-phenol (Spalte 5, Zeile 8 von US-PS 4 420 584) als Kettenabbrecher eingebaut enthalten.

Aus der DE-OS 33 47 684 (Le A 22 595) ist ein Verfahren bekannt, die Doppelbrechung von Kunststoffolien durch eine spezielle Oberflächenbehandlung stark zu reduzieren oder sogar zu eliminieren. Als Kunststoffe sind Polystyrol, Polyvinylchlorid, Polyacrylsäureester und Polyester, insbesondere Polycarbonat, genannt. Die Folien sollen Formstabilität, Wasserdampfdurchlässigkeit, Kratzfestigkeit und Temperaturunempfindlichkeit aufweisen, sich leicht verformen lassen und chemisch gegen die Einwirkung vielfältiger Hilfschemikalien beständig sein. (Seite 6 der DE-OS 33 47 684.)

Aus der DE-OS 34 15 104 (Le A 23 047) sind optisch einachsige Kunststoffolien bekannt, die mit einem Polyacrylatlack beschichtet sind, wodurch die Wasserdampfdurch lässigkeit vermindert und die Chemikalienfestigkeit verbessert wird (Seite 8, Absatz 5 der DE-OS). Als Kunststoffe genannt sind u. a. Polystyrol, Styrol-Acrylnitril-Mischpolymerisate, Polycarbonat, Polyacrylsäureester, Polymethacrylsäureester, Celluloseester oder Mischungen und Copolymerisate, welche die genannten Polymeren enthalten (Seite 8, letzter Absatz der DE-OS). Ganz besonders bevorzugt sind Polycarbonat oder Mischungen von Kunststoffen, die mindestens 10 Gew.-% Polycarbonat enthalten (Seite 9, Absatz 1 der DE-OS 34 15 104). Geeignet sind auch Mischungen von Polymeren, die optisch durchsichtige Kunststoffe liefern. Der Vorteil dieser Mischungen ist eine Verbesserung der mechanischen, insbesondere aber der chemischen Eigenschaften, vor allem der Widerstandsfähigkeit des Kunststoffs gegen die Bestandteile der flüssigkristallinen Phase bei erhöhten Temperaturen. Bevorzugt sind Mischungen mit Siliconen oder Polyestern (DE-OS 34 15 104, Seiten 12/13).

Als Polystyrole sind auch Mischpolymerisate des Styrols mit Maleinsäureester geeignet (Seite 12, Absatz 2 der DE-OS 34 15 104).

Mischungen von Polycarbonaten mit Styrol-Maleinsäureanhydrid-Copolymerisaten sind in der DE-OS 34 15 104 nicht erwähnt.

Die in der DE-OS 3 415 104 beschriebenen Polycarbonate haben außerdem keine p-(Iso-$C_8$-$C_9$-alkyl)-phenyl-Endgruppen.

Aus der DE-OS 33 27 929 (Le A 22 015) sind doppelbrechungsfreie Kunststoffe bekannt, die diese Eigenschaft dadurch erreichen, daß mindestens zweiflächige Gebilde aus Kunststoff mit je einer optischen Achse senkrecht zur Flächennormalen unter einem Winkel von 90° parallel hintereinander angeordnet sind, und daß die Summe der Gangunterschiede überall nahezu Null ist. Vorzugsweise werden Folien so miteinander kombiniert, daß eine Kompensation der Doppelbrechung eintritt (Seite 6 der DE-OS, Absätze 2 und 3).

Geeignete Kunststoffe sind z. B. Polyarylsulfon, Polystyrol, Polyvinylchlorid oder Polyurethan. Vorzugsweise verwendet man Polymerisate, die gute optische Qualitäten haben, wie Styrol-Acrylnitril-Mischpolymerisate, Polymethylpenten, Polycarbonat, Polyacrylsäureester, Polymethacrylsäureester, Celluloseester oder Mischungen und Copolymerisate, welche die genannten Polymere enthalten. Ganz besonders bevorzugt werden Polycarbonat oder Mischungen von Kunststoffen, die mindestens 10 Gew.-% Polycarbonat enthalten, eingesetzt.

Styrol-Maleinsäureanhydrid-Copolymere sind in der DE-OS 33 27 929 nicht erwähnt, jedoch sind als Polystyrole Mischpolymerisate des Styrols mit Maleinsäureester zu verstehen (Seiten 14/15 der DE-OS). Die beschriebenen Polycarboante haben außerdem keine p-(Iso-$C_8$-$C_9$-alkyl)-phenyl-Endgruppen.

Die doppelbrechungsfreien Kunststoffe gemäß DE-OS 33 27 929 müssen neben ausreichenden mechanischen Eigenschaften sich kontinuierlich und flexibel zu allen geforderten Formen verarbeiten lassen und müssen chemisch gegen die Einwirkung vielfältiger Hilfschemikalien beständig sein (DE-OS 33 27 929, Seiten 5/6). Die doppelbrechungsfreien Kunststoffe können noch beschichtet sein (DE-OS, Seite 9).

Geeignet sind die doppelbrechungsfreien Kunststoffe überall dort, wo beispielsweise Laserlichtquellen, Polarisationsfilter, Monolayers, dichroitische Farbstoffe oder doppelte Schichtlagen gebraucht werden (DE-OS 33 27 929, Seiten 15/16).

Bekannt ist auch die allgemeine Möglichkeit, die Doppelbrechung eines Polymeren zu verringern, indem man ein Polymeres mit entgegengesetzter Doppelbrechung hinzufügt (J. Hennig, Vortrag auf der Tagung "Neue Polymere" in Bad Nauheim, 14./15. 04. 1986: "Polymere als Substrate für optische Plattenspeicher").

Nikkei Sangyo (Industry Daily) berichtet in der Ausgabe vom 07. 02. 1986 in einem Artikel "Sumitomo Chemical Developed New Resin for Erasable Optical Discs" davon, daß die Firma optische Datenspeicher aus einem Material aus Polycarbonat und modifiziertem Polystyrol auf den Markt bringen will, die nur geringe Doppelbrechung zeigen.

Die erfindungsgemäß geeigneten Polycarbonate mit p-(Iso-$C_8$-$C_9$-alkyl)-phenyl-Endruppen sind in der DE-OS 2 842 005 (Le A 19 006) bzw. dem entsprechenden US-Patent 4 269 964 beschrieben. Bevorzugte Polycarbonate sind solche, die als Diphenole nur 2,2-Bis(4-hydroxyphenyl)-propan einkondensiert enthalten.

Die erfindungsgmeäß zu verwendenden Styrol-Maleinsäureanhydrid-Copolymerisate sind bekannte thermoplastische Copolymere.

Die Ermittlung des $\overline{M}$w der Styrol-Maleinsäureanhydrid-Copolymerisate erfolgt durch übliche Methoden wie Lichtstreuung, Gelchromatographie oder relative Lösungsviskosität, mit Eichung nach der universellen Eichkurve nach Benoit (Grubisic, Rempp, Benoit, J. Polym. Sci. B 5 (1967) 753).

Die Herstellung der erfindungsgemäßen Mischungen kann beispielsweise durch Compoundierung bei der Extrusion, die Verarbeitung der Mischungen zu Formkörpern, bzw. zu Datenspeichern erfolgt beispielsweise durch Spritzguß.

Die Verwendung der erfindungsgemäßen Mischungen als Substrate für optische Datenspeicher kann wie folgt erläutert werden: "Substrat" für optische Datenspeicher im erfindungsgemäßen Sinne ist das Material der mechanischen Grundlage einer Datenplatte, das sowohl als Träger für eine Informationsschicht bzw. -ebene dient als auch den Abstandshalter zwischen dieser informationstragenden und der äußeren -ebenen-Plattenoberfläche darstellt.

Der informationstragende Lichtstrahl muß sowohl zum Lesen als auch zum Schreiben unverändert das Substrat durchlaufen - auf dem Weg von der ebenen Plattenoberfläche zur gegenüberliegenden Datenseite ebenso wie - im Falle des Lesestrahls - nach Informationsübertragung von dieser wieder zur äußeren Oberfläche zurück, aus der er zum Detektor hin austritt.

Beispiele für optische Datenspeicher sind beispielsweise die Audio-Compact-Disc und die Video-Disc.

## Beispiel 1

Gemischt wurden wechselnde Anteile von einem Homopolycarbonat der rel. Lösungsviskosität 1,20 (gemessen bei 25°C in $CH_2Cl_2$ bei 0,5 g in 100 ml Lösung), hergestellt nach dem üblichen Phasengrenzflächenverfahren aus 2,2-Bis-(4-hydroxphenyl)-propan mit 4-(1,1,3,3-Tetra-methylbutyl)-phenol als Kettenabbrecher mit einem handelsüblichen Styrol-Maleinsäureanhydrid-Copolymerisat (SMA) mit 5 Gew.-% Maleinsäureanhydrid ($M_w$ = 300 000, U = $M_w/M_n$ = 6,7, ermittelt durch Gelchromatographie mit UV-Detektor und PS-Eichung) durch Compoundierung an einer ZSK 32 bei 270-290°C.

Die erhaltenen Compounds wurden an einer Arburg 170 Minispritzgußmaschine zu Flachstäben 80 x 12,7 x 1,6 mm verspritzt bei einer Massetemperatur von 270°C. Die Doppelbrechung der Mischungen wurde beurteilt durch Messung der Gangunterschiede in der Mitte der Flachstäbe durch Verwendung eines üblichen Komparators mittels eines Polarisationsmikroskops.

### Beispiel 2

Wie in Beispiel 1 wurde das Polycarbonat mit einem SMA gemischt. Dieses enthielt 8 Gew.-% Maleinsäureanhydrid ($M_w$ 257 000, U = 5,1).

### Beispiel 3

Wie in Beispiel 1 wurde das Polycarbonat mit einem SMA gemischt, das 14 Gew.-% Maleinsäureanhydrid enthielt ($M_w$ 184 000, U = 4,8).

Es zeigt sich, daß sich die Doppelbrechung des Polycarbonats mit steigenden SMA-Gehalten verringert bis zur Kompensation bei knapp 40 % SMA.

Eine Untersuchung der Flachstäbe aus den weitgehend kompensierten Blends zwischen gekreuzten Polarisatoren hinsichtlich Doppelbrechung in Querrichtung zur Fläche der Stäbe durch Betrachtung der - schräg-gestellten Stäbe ergab, daß insbesondere auch in den beiden Querrichtungen gegenüber reinem Polycarbonat eine überraschend starke Verringerung der Doppelbrechung auftrat.

Tabelle 1: Doppelbrechung von Polycarbonat/SMA-Abmischungen

Messung des Gangunterschieds in Stabmitte im Durchlicht (senkrecht zur Stabfläche) am Flachstab 80 x 12,7 x 1,6 mm.

| SMA-Gehalt | Gangunterschiede | | $nm \cdot mm^{-1}$ |
|---|---|---|---|
| % | Bsp. 1 | Bsp. 2 | Bsp. 3 |
| 0 | 250 | 230 | 225 |
| 10 | 225 | 210 | 210 |
| 20 | 150 | 155 | 135 |
| 25 | 110 | 115 | 100 |
| 30 | 70 | 70 | 55 |
| 35 | 25 | 25 | 15 |
| 40 | - 20 | 0 | - 30 |
| 50 | -140 | -140 | -130 |
| 60 | -450 | -345 | -225 |
| 70 | -550 | -470 | -290 |

Tabelle 2: Doppelbrechung von Polycarbonat/SMA-Abmischungen

Messung des Gangunterschieds in Stabmitte am Querschnitt (in Stab-Längsrichtung) am Flachstab 80 x 12,7 x 1,6 mm.

| SMA-Gehalt | Gangunterschied / $nm \cdot mm^{-1}$ | | |
|---|---|---|---|
| % | Bsp. 1 | Bsp. 2 | Bsp. 3 |
| 0 | | 490 | |
| 40 | 150 | 170 | 200 |

**Ansprüche**

1. Mischungen bestehend aus
A) 20 Gew.-% bis 95 Gew.-% an thermoplastischen aromatischen Polycarbonaten mit einem $\overline{M}$w (Gewichtsmittelmolekulargewicht, ermittelt über die selektive Viskosität in $CH_2Cl_2$ bei einer Konzentration von 0,5 g Polycarbonat in 100 ml Lösung oder ermittelt durch andere übliche Methoden wie Lichtstreuung oder Gelchromatographie) zwischen 10 000 und 40 000 und p-(Iso-$C_8$-$C_9$-alkyl)-phenyl-Endgruppen, und
B) 80 Gew.-% bis 5 Gew.-% an thermoplastischen Styrol-Maleinsäureanhydrid-Copolymerisaten mit einem $\overline{M}$w (Gewichtsmittelmolekulargewicht) zwischen 60 000 und 400 000,
dadurch gekennzeichnet, daß die Polycarbonate A) aus mindestens 80 Mol-%, bezogen auf Mole Diphenole, 2,2-Bis-(4-hydroxpyhenyl)-propan und aus maximal 20 Mol-%, bezogen auf Mole Diphenole, anderen Diphenolen, ausgewählt aus Hydrochinon, Resorcin, Dihydroxydiphenyl, den Gruppen der Bis-hydroxyphenyl-alkane, -cycloalkane, -sulfide, -sulfone, -ether sowie deren kernalkylierten Verbindungen hergestellt sind, und daß die Copolymerisate B) einen Gehalt an einpolymerisierten Maleinsäure anhydrid zwischen 3 Gew.-% und 30 Gew.-%, bezogen auf Gewichtssumme aus Styrol und Maleinsäureanhydrid, haben.

2. Mischungen gemäß Anspruch 1 bestehend aus 50 Gew.-% bis 85 Gew.-% der Komponente A) und 50 Gew.-% bis 15 Gew.-% der Komponente B).

3. Mischungen gemäß Anspruch 1, dadurch gekennzeichnet, daß die Polycarbonate A) Homopolycarbonate aus 2,2-Bis-(4-hydroxyphenyl)-propan sind.

4. Mischungen gemäß Anspruch 1, dadurch gekennzeichnet, daß die Copolymerisate B) einen Gehalt an einpolymerisiertem Maleinsäureanhydrid zwischen 5 Gew.-% und 15 Gew.-% haben.

5. Verwendung der Mischungen gemäß Ansprüche 1 bis 4 als Substrate für optische Datenspeicher.